# EUROPÄISCHE PATENTSCHRIFT

(11) **EP 3 799 274 B1**
(45) Veröffentlichungstag und Bekanntmachung des Hinweises auf die Patenterteilung: **17.06.2026**
(21) Anmeldenummer: 20191696.2
(22) Anmeldetag: 19.08.2020
(51) Int. Cl.: H02K 9/19, H02K 5/20, H02K 11/33, H02K 5/22

(54) **ELEKTRISCHE ANTRIEBSVORRICHTUNG FÜR EIN FAHRZEUG**
ELECTRIC DRIVING DEVICE FOR A VEHICLE
DISPOSITIF D'ENTRAÎNEMENT ÉLECTRIQUE POUR UN VÉHICULE

(30) Priorität: 30.09.2019 DE 102019215047
(43) Veröffentlichungstag der Anmeldung: 31.03.2021
(73) Patentinhaber: Robert Bosch GmbH, 70442 Stuttgart (DE)
(72) Erfinder: Schoch, Sebastian, 74379 Ingersheim (DE)

(56) Entgegenhaltungen:
- WO-A1-2013/037409
- CN-A- 110 149 020
- DE-A1- 102007 020 372
- DE-A1- 19 626 213
- DE-C2- 19 626 213
- JP-B2- 4 229 922

## Beschreibung

### Stand der Technik

Elektrisch angetriebene Fahrzeuge weisen einen Elektromotor auf, welcher kinematisch an zumindest eine Achse oder an zumindest ein Rad des Fahrzeugs gekoppelt ist, um diese bzw. dieses anzutreiben. Typischerweise ist als elektrische Energiequelle für den Motor ein elektrischer Energiespeicher, insbesondere ein Akkumulator, vorgesehen. Häufig wird der Elektromotor über eine Leistungselektronik mit dem Energiespeicher elektrisch verbunden.

Um eine hohe Drehmomentabgabe bzw. eine hohe Leistungsabgabe des Elektromotors zu erzielen, sind häufig hohe elektrische Ströme notwendig, die dem Elektromotor aus der elektrischen Energiequelle zugeführt werden. Derart hohe elektrische Ströme führen aufgrund des elektrischen Widerstands zu einer Erwärmung der stromführenden elektrischen Leiter.

Um einer Überhitzung des Elektromotors vorzubeugen sind, werden diese typischerweise gekühlt, z.B. mithilfe einer in ein Gehäuse des Elektromotors integrierten Mantelkühlung, wie dies in der US 7 723 874 B2 beschrieben wird. Weiterer Kühlbedarf besteht bei elektrischen Verbindungsleitern, welche den Elektromotor mit der Leistungselektronik verbinden, um einer Wärmeübertragung vom Elektromotor an die Leistungselektronik vorzubeugen.

Die DE 20 2017 101 551 U1 beschreibt ferner ein elektrisches Kabel zum Laden einer Batterie eines Elektrofahrzeugs, wobei in das Kabel eine Fluidleitung zum Kühlen integriert ist. Die DE 10 2010 036 994 A1 beschreibt eine Vorrichtung zum Verteilen elektrischer Energie in einem Fahrzeug.

Weitere Antriebsvorrichtungen sind aus der DE 196 26 213 A1, der DE 10 2007 020372 A1 und der JP 4 229922 B2 bekannt.

### Offenbarung der Erfindung

Die vorliegende Erfindung betrifft eine elektrische Antriebseinrichtung nach Anspruch 1.

Nach einem ersten Aspekt der Erfindung ist eine elektrische Antriebseinrichtung für ein Fahrzeug vorgesehen. Die erfindungsgemäße Antriebseinrichtung umfasst einen Elektromotor, welcher dazu eingerichtet ist, ein Drehmoment an einer um eine Rotationsachse drehbaren Abtriebswelle bereitzustellen, und ein Motorgehäuse mit einem die Rotationsachse umschließenden Mantelabschnitt, welcher einen Kühlbereich mit einem darin ausgebildeten Kühlkanal zur Durchleitung eines Kühlmittels aufweist, wobei der Elektromotor in dem Motorgehäuse angeordnet ist. Ferner umfasst die Antriebseinrichtung eine erste elektrische Anschlusseinrichtung zum Anschluss an einen Ausgang einer Leistungselektronik, eine an dem Motorgehäuse angeordnete zweite elektrische Anschlusseinrichtung, an welche der Elektromotor elektrisch angeschlossen ist, und zumindest zwei Verbindungsleiter, welche jeweils mit der ersten Anschlusseinrichtung und der zweiten Anschlusseinrichtung elektrisch verbunden sind und jeweils im Kühlbereich an dem Mantelabschnitt des Motorgehäuses anliegen.

Eine der Erfindung zugrundeliegende Idee besteht darin, die elektrischen Verbindungsleiter, welche eine elektrische Verbindung zwischen einer dem Elektromotor zugeordneten Anschlusseinrichtung und einer einer Leistungselektronik zugeordneten Anschlusseinrichtung herstellen, an einen gekühlten Mantelabschnitt des Motorgehäuses anzulegen. Der beispielsweise im Wesentlichen zylindrische Mantelabschnitt, in welchem der Elektromotor angeordnet ist, weist demnach einen oder mehrere Kühlkanäle auf, die in einen Querschnitt des Mantelabschnitts integriert sind. Der Elektromotor ist an einer Innenfläche des Mantelabschnitts angeordnet, die Verbindungsleiter liegen an einer entgegengesetzt zu der Innenfläche gelegenen Außenfläche an bzw. stehen mit dieser in Kontakt und der Kühlkanal ist im Querschnitt zwischen der Innenfläche und der Außenfläche vorgesehen.

Durch die Kombination eines Motorgehäuses mit einem gekühlten Mantelabschnitt und Verbindungsleitern, die an dem gekühlten Bereich des Mantelabschnitts anliegen, wird vorteilhaft eine effiziente Kühlung sowohl des in dem Motorgehäuse angeordneten Elektromotors als auch der elektrischen Verbindungsleiter erzielt. Damit wird durch ein und dieselbe Kühlstruktur, nämlich die im Mantelabschnitt vorgesehenen Kühlkanäle, für den Elektromotor und die Verbindungsleiter die Anzahl der Teile der Antriebseinrichtung vorteilhaft reduziert. Dies erleichtert die Montage der Antriebseinrichtung und verringert damit vorteilhaft die Herstellungskosten.

Vorteilhafte Ausgestaltungen und Weiterbildungen ergeben sich aus den auf die unabhängigen Ansprüche rückbezogenen Unteransprüchen in Verbindung mit der Beschreibung.

Gemäß einer Ausführungsform der Antriebseinrichtung kann vorgesehen sein, dass der Mantelabschnitt sich entlang der Rotationsachse erstreckt und der Kühlkanal sich spiralförmig um die Rotationsachse erstreckt, so dass ein die Rotationsachse umschließender Kühlbereich ausgebildet ist. Damit wird vorteilhaft eine flächige Kühlung des gesamten Umfangs des Mantelabschnitts erzielt und damit der Wärmeabtransport von den an dem Mantelabschnitt anliegenden Verbindungsleitern weiter verbessert. Hierbei kann optional vorgesehen sein, dass die Verbindungsleiter sich in dem Kühlbereich entlang der Rotationsachse erstrecken. Damit wird die Kühlung der Verbindungsleiter weiter verbessert.

Erfindungsgemäß ist vorgesehen, dass der Mantelabschnitt des Motorgehäuses im Kühlbereich an einer Außenfläche ausgebildete Vertiefungen aufweist, wobei jeweils ein Verbindungsleiter in einer Vertiefung verläuft. Demnach können an der Außenfläche des Mantelabschnitts mehrere Nuten vorgesehen sein, in welchen die Verbindungsleiter angeordnet sind. Dadurch wird die Kontaktfläche zwischen Verbindungsleiter und Mantelabschnitt vergrößert und damit die Wärmeleitung zwischen Verbindungsleiter und Mantelabschnitt weiter verbessert.

Dabei ist erfindungsgemäß weiter vorgesehen, dass die Vertiefungen mit einer zu den Verbindungsleitern korrespondierenden Querschnittsform ausgebildet sind. Beispielsweise kann vorgesehen sein, dass die Verbindungsleiter mit einem kreisförmigen Querschnitt ausgebildet sind und die Vertiefungen jeweils als Nuten mit halbkreisförmigem Querschnitt realisiert sind. Damit wird die Kontaktfläche zwischen Verbindungsleiter und Mantelabschnitt vorteilhaft noch weiter vergrößert.

Gemäß einer weiteren Ausführungsform kann die Antriebseinrichtung ein Anschlussgehäuse mit zumindest zwei von dem Mantelabschnitt des Motorgehäuses vorstehenden Anschlussgehäusewandungen aufweisen, wobei die Verbindungsleiter zwischen den Anschlussgehäusewandungen angeordnet sind. Ferner kann zusätzlich ein Anschlussgehäusedeckel vorgesehen sein, welcher auf die Anschlussgehäusewandungen aufgesetzt ist und einen Pressabschnitt aufweist, welcher an den Verbindungsleitern zur Ausübung einer Anpresskraft anliegt. Demnach kann an dem Mantelabschnitt des Motorgehäuses ein Anschlussgehäuse vorgesehen sein, dessen Anschlussgehäusewandungen einen durch einen Teilbereich der Außenfläche des Mantelabschnitts gebildeten Anschlussbereich umgrenzen. Beispielsweise können vier Anschlussgehäusewandungen vorgesehen sein, welche einen rechteckförmigen Anschlussbereich umgrenzen. Die Verbindungsleiter verlaufen in diesem Anschlussbereich, also allgemein zwischen den Anschlussgehäusewandungen. Der Anschlussgehäusedeckel ist auf die Anschlussgehäusewandungen aufgesetzt, z.B. mit einem Plattenabschnitt, und weist einen Pressabschnitt auf, der z.B. blockförmig realisiert sein kann und von dem Plattenabschnitt vorsteht. Der Pressabschnitt ist, wenn der Anschlussgehäusedeckel auf die Anschlussgehäusewandungen aufgesetzt ist, der Außenfläche des Mantelabschnitts des Motorgehäuses zugewandt, und liegt an den Verbindungsleitern an. Insbesondere kann der Pressabschnitt in Richtung der Verbindungsleiter vorgespannt sein, z.B. indem der Plattenabschnitt an den Anschlussgehäusewandungen befestigt ist. Allgemein kann der Pressabschnitt eine Anpresskraft auf die Verbindungsleiter ausüben. Dadurch wird die Anlage der Verbindungsleiter an die Mantelfläche und damit die Wärmeübertragung zwischen Mantelfläche und Verbindungsleiter weiter verbessert.

Gemäß einer weiteren Ausführungsform kann vorgesehen sein, dass die erste Anschlusseinrichtung im Bereich des Mantelabschnitts des Motorgehäuses angeordnet ist, und wobei die zweite Anschlusseinrichtung an einem Stirnabschnitt des Motorgehäuses angeordnet ist, welcher sich quer zu der Rotationsachse erstreckt und mit dem Mantelabschnitt verbunden ist. Der Stirnabschnitt bildet einen axialen Abschluss des Motorgehäuses bzw. ist mit einem axialen Ende des Mantelabschnitts verbunden. Die zweite Anschlusseinrichtung kann damit am axialen Ende des Motorgehäuses angeordnet sein. Damit ergibt sich ein Verlauf der Verbindungsleiter zumindest abschnittsweise entlang der Rotationsachse. Insbesondere bei einem spiralförmigen Verlauf des Kühlkanals wird dadurch die Kühlung der Verbindungsleiter weiter verbessert.

Gemäß einer weiteren Ausführungsform kann vorgesehen sein, dass die Antriebseinrichtung ein Elektronikgehäuse zur Aufnahme einer Leistungselektronik aufweist, welches an dem Mantelabschnitt des Motorgehäuses angeordnet ist, wobei die erste Anschlusseinrichtung an dem Elektronikgehäuse angeordnet ist. Damit wird die Leistungselektronik vorteilhaft thermisch von dem Mantelgehäuse entkoppelt. Durch die Kühlung des Mantelabschnitts und dadurch der an diesem anliegenden Verbindungsleiter wird vorteilhaft einer Wärmeübertragung zwischen dem Elektromotor und der Leistungselektronik vorgebeugt.

Gemäß einer weiteren Ausführungsform kann vorgesehen sein, dass der Kühlkanal mit einem Kühlfluid gefüllt ist, insbesondere mit einem Wasser-Glykol-Gemisch.

Im Folgenden wird die Erfindung unter Bezugnahme auf die Figuren der Zeichnungen erläutert. Von den Figuren zeigen:
- Fig. 1: eine schematische Ansicht eines Fahrzeugs gemäß einem Ausführungsbeispiel der Erfindung als Blockschaltbild;
- Fig. 2: eine schematische Schnittansicht einer elektrischen Antriebseinrichtung gemäß einem Ausführungsbeispiel der Erfindung;
- Fig. 3: eine perspektivische Ansicht einer elektrischen Antriebseinrichtung gemäß einem weiteren Ausführungsbeispiel der Erfindung;
- Fig. 4: eine Detailansicht der in Fig. 3 gezeigten Antriebseinrichtung im Bereich eines Anschlussgehäuses;
- Fig. 5: eine vergrößerte Schnittansicht der Antriebseinrichtung, die sich bei einem Schnitt entlang der in Fig. 4 eingezeichneten Linie A-A ergibt; und

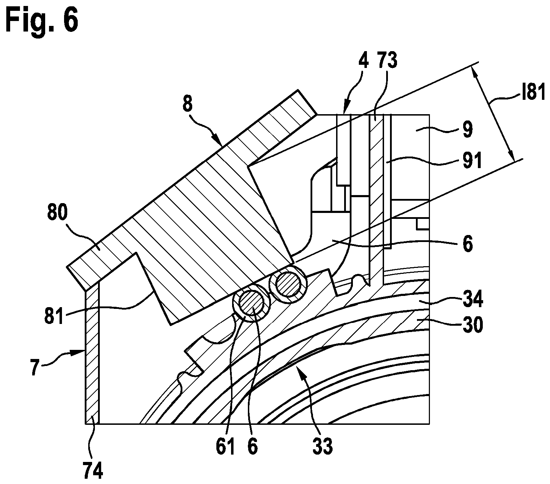

- Fig. 6: eine Schnittansicht einer Antriebseinrichtung gemäß einem weiteren Ausführungsbeispiel der Erfindung im Bereich des Anschlussgehäuses.

In den Figuren bezeichnen dieselben Bezugszeichen gleiche oder funktionsgleiche Komponenten, soweit nichts Gegenteiliges angegeben ist.

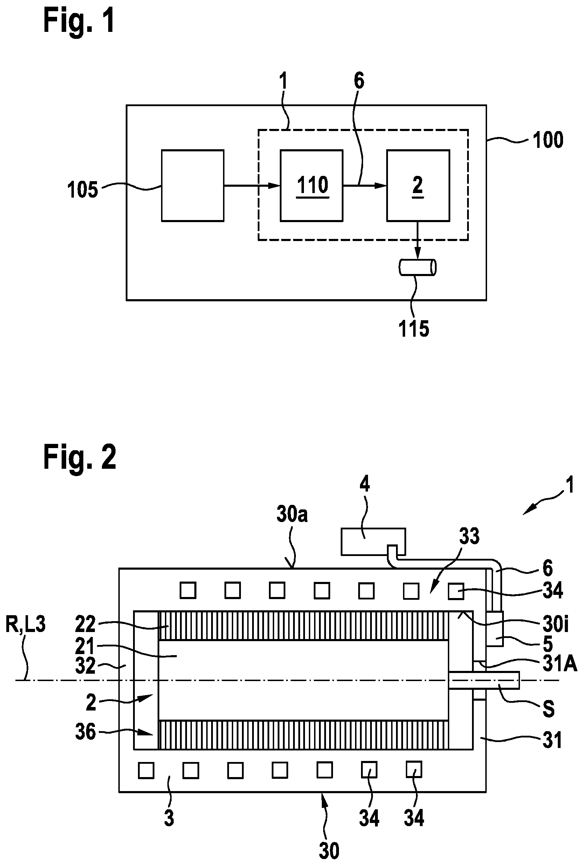

Fig. 1 zeigt rein schematisch eine Blockdarstellung eines Fahrzeugs 100, insbesondere eines Elektrofahrzeugs, wie z.B. ein Elektroauto. Das Fahrzeug 100 weist eine elektrische Antriebseinrichtung 1, einen elektrischen Energiespeicher 105 und eine Antriebsachse oder einen Antriebsstrang 115 auf. Wie in Fig. 1 schematisch dargestellt ist, weist die elektrische Antriebseinrichtung 1 eine elektrische Maschine 2 und eine optionale Leistungselektronik 110 auf. Die elektrische Maschine 2 kann beispielsweise ein Elektromotor sein, der auch als Generator betrieben werden kann. Im Folgenden wird die elektrische Maschine daher als Elektromotor 2 bezeichnet. Der Elektromotor 2 kann insbesondere als Drehstrommotor realisiert sein. Auch ist denkbar, dass der Elektromotor 2 als Gleichstrommotor realisiert ist. Der Aufbau des Elektromotors 2 wird nachfolgend unter Bezugnahme auf Fig. 2 noch im Detail erläutert.

Wie dies in Fig. 1 rein schematisch dargestellt ist, ist der Elektromotor 2 elektrisch über Verbindungsleiter 6 mit der optionalen Leistungselektronik 110 verbunden. Die Leistungselektronik 110 ist ihrerseits elektrisch mit dem Energiespeicher 105, welcher z.B. als Akkumulator realisiert sein kann, verbunden. Die Leistungselektronik 110 kann insbesondere einen Umrichter bzw. einen Wechselrichter aufweisen, mit welchem die vom Energiespeicher 105 bereitgestellte Gleichspannung in eine Wechselspannung konvertierbar ist. Der Elektromotor 2 ist ferner kinematisch an die Achse 115 gekoppelt, wie in Fig. 1 rein schematisch dargestellt ist.

Fig. 2 zeigt in schematischer Weise und rein beispielhaft eine Schnittansicht einer Antriebseinrichtung 1, wie sie z.B. in dem in Fig. 1 beispielhaft dargestellten Fahrzeug 100 verwendet werden kann. Die Antriebseinrichtung 1 weist einen Elektromotor 2 bzw. eine elektrische Maschine, ein Motorgehäuse 3, eine erste elektrische Anschlusseinrichtung 4, eine zweite elektrische Anschlusseinrichtung 5 und zumindest zwei elektrische Verbindungsleiter 6 auf.

Wie in Fig. 2 schematisch dargestellt ist, umfasst der Elektromotor 2 einen um eine Rotationsachse R drehbaren Rotor 21 und einen koaxial zu diesem angeordneten und diesen umschließenden Stator 22. Eine Abtriebswelle S kann kinematisch an den Rotor 21 gekoppelt sein, welche beispielsweise koaxial zu der Rotationsachse R des Rotors 21 angeordnet sein kann, wie dies in Fig. 2 beispielhaft dargestellt ist. Allgemein ist der Elektromotor 2 dazu eingerichtet, ein Drehmoment an der um eine Rotationsachse R drehbaren Abtriebswelle S bereitzustellen.

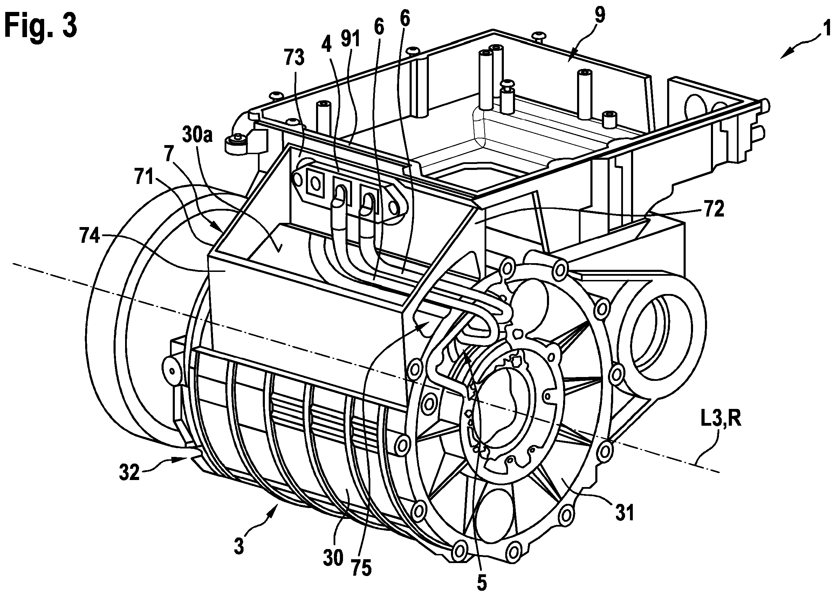

Das Motorgehäuse 3 weist einen eine Längsachse L3 definierenden und diese umschließenden Mantelabschnitt 30, einen ersten Stirnabschnitt 31 und einen zweiten Stirnabschnitt 32 auf. Der erste Stirnabschnitt 31 erstreckt sich quer zu der Längsachse L3 und ist in Bezug auf die Längsachse L3 an einem ersten Ende des Mantelabschnitts 30 angeordnet. Der zweite Stirnabschnitt 32 erstreckt sich quer ebenfalls quer zu der Längsachse L3 und ist in Bezug auf die Längsachse L3 an einem entgegengesetzt zu dem ersten Ende gelegenen zweiten Ende des Mantelabschnitts 30 angeordnet. Wie in Fig. 2 und auch in Fig. 3 beispielhaft dargestellt ist, kann der Mantelabschnitt 30 einen im Wesentlichen zylindrischen Querschnitt aufweisen.

Wie in Fig. 2 schematisch dargestellt ist, weist der Mantelabschnitt 30 eine der Längsachse L3 zugewandte Innenfläche 30i und eine entgegengesetzt zu der Innenfläche 30i orientierte Außenfläche 30a auf, wobei zwischen der Innenfläche 30i und die Außenfläche 30a ein Querschnitt des Mantelabschnitts 30 definiert ist. Der Mantelabschnitt 30, insbesondere die Innenfläche 30i definiert einen Innenraum 36. Wie in Fig. 2 schematisch gezeigt ist, ist in dem Querschnitt des Mantelabschnitts 30 ein Kühlkanal 34 ausgebildet. Der Kühlkanal 34 kann sich beispielsweise spiralförmig um die Längsachse L3 erstrecken, wie dies in Fig. 2 schematisch dargestellt ist. Der Kühlkanal 34 dient zur Durchleitung eines Kühlfluids, wie beispielsweise eines Wasser-Glykol-Gemischs. Ein Bereich des Mantelabschnitts 30, in welchem der Kühlkanal 34 vorgesehen ist, bildet einen Kühlbereich 33. Bei dem in Fig. 2 beispielhaft gezeigten spiralförmigen Verlauf wird somit ein die Längsachse L3 umschließender Kühlbereich 33 ausgebildet.

Das Motorgehäuse 3 kann insbesondere aus einem Metallmaterial hergestellt sein, z.B. aus einer Aluminiumlegierung. Da Metallmaterial typischerweise eine hohe Wärmeleitfähigkeit bzw. einen geringen Wärmeleitwiderstand aufweist, kann durch ein in dem Kühlkanal 34 zirkulierendes Kühlfluid eine effiziente Kühlung des Motorgehäuses 3 erzielt werden. Auch ist denkbar, dass das Motorgehäuse 3 aus einem Kunststoffmaterial gebildet ist.

Wie in Fig. 2 weiterhin schematisch dargestellt ist, ist der Elektromotor 2 in dem durch den Mantelabschnitt 30 definierten Innenraum 36 und damit in dem Motorgehäuse 3 angeordnet. Hierbei ist der Stator 22 an der Innenfläche 30i des Mantelabschnitts 30 angeordnet. Die Rotationsachse R kann hierbei insbesondere koaxial zu der Längsachse L3 des Mantelabschnitts 30 angeordnet sein bzw. mit dieser übereinstimmen. Die Abtriebswelle S kann insbesondere durch eine in einem der Mantelabschnitte 31, 32, z.B. in dem ersten Mantelabschnitt 31 ausgebildete Öffnung 31A hindurchragen.

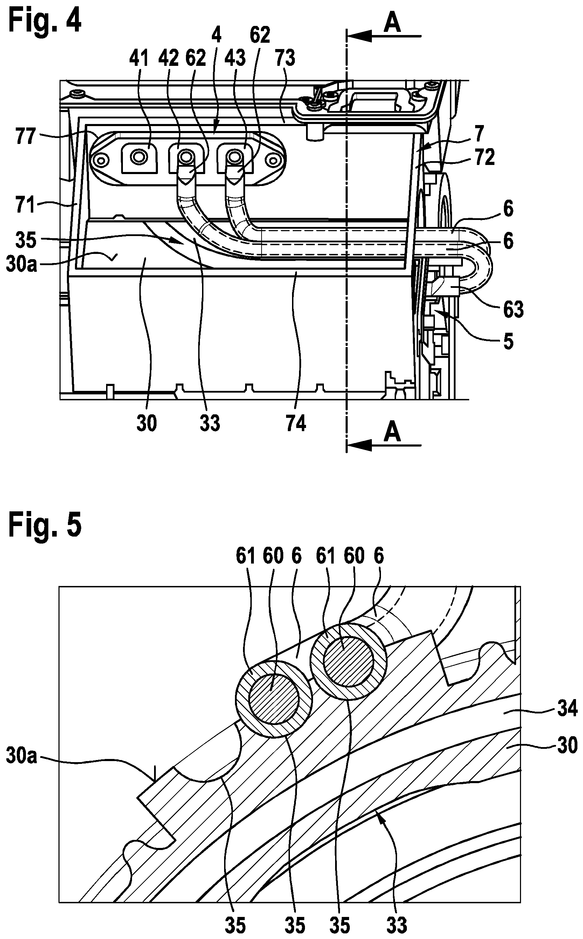

Die erste und die zweite Anschlusseinrichtung 4, 5 sind in Fig. 2 lediglich symbolisch als Block dargestellt. Eine rein beispielhafte Gestaltung der ersten Anschlusseinrichtung 4 ist detaillierter in den Fign. 3 und 4 dargestellt. Wie insbesondere in Fig. 4 erkennbar ist, kann die erste Anschlusseinrichtung 4 mehrere elektrische Kontaktstrukturen 41, 42, 43 aufweisen. In Fig. 4 sind rein beispielhaft drei nebeneinander angeordnete Kontaktplatten als Kontaktstrukturen 41, 42, 43 dargestellt. Selbstverständlich sind auch mehr oder weniger als drei Kontaktstrukturen denkbar. Die Kontaktstrukturen 41, 42, 43 dienen zum elektrischen und mechanischen Anschluss der Verbindungsleiter 6.

Ferner sind die Kontaktstrukturen 41, 42, 43 der ersten Anschlusseinrichtung 4 zum Anschluss an einen Ausgang der Leistungselektronik 110 (in den Fign. 2 bis 4 nicht dargestellt) vorgesehen. Die erste Anschlusseinrichtung 4 kann insbesondere im Bereich des Mantelabschnitts 30 angeordnet sein, wie dies in Fig. 2 rein schematisch dargestellt ist. Beispielsweise kann die Anschlusseinrichtung 4 an einem Elektronikgehäuse 9 angeordnet sein, das an dem Mantelabschnitt 30 angeordnet ist, wie dies in den Fign. 3 und 4 beispielhaft dargestellt ist.

Die zweite elektrische Anschlusseinrichtung 5 ist nicht im Detail dargestellt. Ähnlich wie die erste Anschlusseinrichtung 5 kann die zweite Anschlusseinrichtung 5 elektrische Kontaktstrukturen aufweisen, die einen elektrischen und mechanischen Anschluss der Verbindungsleiter 6 ermöglichen. Die zweite elektrische Anschlusseinrichtung 5 ist elektrisch mit dem Elektromotor 2 verbunden, z.B. mit dem Stator 22. Die zweite Anschlusseinrichtung 5 ist an dem Motorgehäuse 3 angeordnet. Insbesondere kann die zweite Anschlusseinrichtung 5 an einem der Stirnabschnitte 31, 32 angeordnet sein, z.B. an dem ersten Stirnabschnitt 31, wie dies in den Fign. 2 und 3 beispielhaft gezeigt ist.

Die Verbindungsleiter 6 sind jeweils mit der ersten Anschlusseinrichtung 4 und der zweiten Anschlusseinrichtung 5 elektrisch verbunden. Insbesondere können die Verbindungsleiter 6 jeweils mit den elektrischen Kontaktstrukturen 41-43 der ersten Anschlusseinrichtung 4 und den elektrischen Kontaktstrukturen der zweiten Anschlusseinrichtung 5 verbunden sein. Die Verbindungsleiter 6 können beispielsweise als Leitungskabel realisiert sein, wobei ein elektrischer Leiter 60 von einem elektrisch isolierenden Mantel 61 umschlossen ist, wie dies in Fig. 5 beispielhaft dargestellt ist. Jedoch ist auch denkbar, die Verbindungsleiter als Stromschienen ohne Mantel zu realisieren. Allgemein weisen die Verbindungsleiter 6 einen elektrischen Leiter 60 auf, der aus einem elektrisch leitfähigen Material, z.B. Kupfer, gebildet ist. Wie in den Fign. 3 und 4 beispielhaft dargestellt ist, können die Enden der Verbindungsleiter 6 jeweils mit Anschlussstrukturen 62, 63, wie z.B. Kabelschuhen, versehen sein, um einen Anschluss an der Verbindungsleiter 6 an die Anschlusseinrichtung 4, 5 zu erleichtern. Allgemein sind zumindest zwei Verbindungsleiter 6 vorgesehen.

Jedoch können auch drei oder mehr Verbindungsleiter 6 vorgesehen sein, z.B. bei einer Realisierung des Elektromotors 2 als Drehstrommotor.

Wie in Fig. 2 rein schematisch und in den Fign. 3 und 4 rein beispielhaft im Detail dargestellt ist, verlaufen die Verbindungsleiter 6 im Kühlbereich 33 des Mantelabschnitts 30 des Motorgehäuses 3 und liegen an dem Mantelabschnitt 30 bzw. an der Außenfläche 30a des Mantelabschnitts 30 an. Somit stehen die Verbindungsleiter 6 mit dem Material des Mantelabschnitts 30 in Kontakt und können damit durch die im Kühlkanal 34 zirkulierende Kühlflüssigkeit gekühlt werden. Wie dies in den Fign. 2 bis 4 beispielhaft gezeigt ist, kann vorgesehen sein, dass die die Verbindungsleiter 6 sich in dem Kühlbereich 33 entlang der Rotationsachse R bzw. entlang der Längsachse L3 erstrecken.

Wie in den Fign. 4 und 5 beispielhaft dargestellt ist, kann der Mantelabschnitt 30 des Motorgehäuses 3 im Kühlbereich 33 an der Außenfläche 30a ausgebildete Vertiefungen 35 aufweisen. Die Vertiefungen 35 verlaufen an dem Mantelabschnitt 30 zwischen einem Bereich, in dem die erste Anschlusseinrichtung 30 angeordnet ist zu einem Bereich, der benachbart zu der zweiten Anschlusseinrichtung 5 gelegen ist. Die Vertiefungen 35 können insbesondere als Nuten ausgeführt sein, welche z.B. einen halbkreisförmigen Querschnitt aufweisen, wie dies in Fig. 5 rein beispielhaft gezeigt ist. Wie in den Fign. 2 bis 5 weiterhin dargestellt ist, verläuft jeweils ein Verbindungsleiter 6 in einer Vertiefung 35. Wie insbesondere in Fig. 5 erkennbar ist, kann vorgesehen sein, dass die Vertiefungen 35 mit einer zu den Verbindungsleitern 6 korrespondierenden Querschnittsform ausgebildet sind. Durch die Vertiefungen wird die Kontaktfläche zwischen den Verbindungsleitern 6 und dem Mantelabschnitt 30 vorteilhaft vergrößert. Wie insbesondere in Fig. 5 erkennbar ist, kann bei einem spiralförmigen Verlauf des Kühlkanals 34 um die Rotationsachse R bzw. die Längsachse L3 dadurch auf sehr effiziente Weise ein Bündel nebeneinanderliegender Verbindungsleiter 6 gekühlt werden.

In Fig. 3 ist beispielhaft dargestellt, dass die Antriebseinrichtung 1 ein optionales Anschlussgehäuse 7 aufweist. Alternativ oder zusätzlich hierzu kann ein optionales Elektronikgehäuse 9 vorgesehen sein.

Wie in Fig. 3 beispielhaft dargestellt, kann das optionale Anschlussgehäuse 7 eine von dem Mantelabschnitt 30 und sich quer zu der Längsachse L3 erstreckende erste Anschlussgehäusewandung 71, eine von dem Mantelabschnitt 30 und sich quer zu der Längsachse L3 erstreckende zweite Anschlussgehäusewandung 72, die entlang der Längsachse L3 zu der ersten Anschlussgehäusewandung 71 beabstandet ist, eine zwischen der ersten und der zweiten Anschlussgehäusewandung 71, 72 verlaufende dritte Anschlussgehäusewandung 73 und eine zwischen der ersten und der zweiten Wandung 71, 72 verlaufende vierte Anschlussgehäusewandung 74, die beabstandet zu der dritten Anschlussgehäusewandung 73 angeordnet ist, aufweisen. Die Wandungen 71, 72, 73, 74 können insbesondere einstückig mit dem Mantelabschnitt 30 des Motorgehäuses 3 hergestellt sein. Auch ist denkbar, dass die Wandungen 71, 72, 73, 74 an dem Mantelabschnitt 30 des Motorgehäuses 3 befestigt sind. Wie in Fig. 3 beispielhaft dargestellt, können die Wandungen 71, 72, 73, 74 insbesondere ein rechteckförmiges Gehäuse bilden. Die Wandungen 71, 72, 73, 74 umgrenzten damit einen Bereich der Außenfläche 30a des Mantelabschnitts 30 des Motorgehäuses 3. Allgemein kann das Anschlussgehäuse 7 zumindest zwei von dem Mantelabschnitt 30 des Motorgehäuses 3 vorstehenden Anschlussgehäusewandungen 71, 72, 73, 74 aufweisen.

Wie in Fig. 3 erkennbar, ist das Anschlussgehäuse 7 in dem Kühlbereich 33 des Mantelabschnitts 30 angeordnet. Beispielsweise kann die zweite Anschlussgehäusewandung 72 an dem ersten Ende des Mantelabschnitts 30 angeordnet sein. Die Verbindungsleiter 6 verlaufen in dem Kühlbereich 33 des Mantelabschnitts 30 und insbesondere in oder durch den durch die Wandungen 71, 72, 73, 74 umgrenzten Bereich. Wie in Fig. 3 beispielhaft dargestellt, kann die zweite Anschlussgehäusewandung 72 eine Öffnung 75 aufweisen, durch welche hindurch sich die Verbindungsleiter 6 erstrecken. Wie weiterhin in Fig. 4 dargestellt ist, kann die dritte Anschlussgehäusewandung 73 eine Ausnehmung 77 aufweisen, in welcher die erste Anschlusseinrichtung 4 angeordnet ist. Allgemein kann die erste Anschlusseinrichtung 4 damit im Bereich des Mantelabschnitts 30 des Motorgehäuses 3 angeordnet sein.

Fig. 5 zeigt beispielhaft und schematisch einen Schnitt senkrecht zur Längsachse L3 durch das Anschlussgehäuse 7. Wie in Fig. 5 beispielhaft und rein schematisch dargestellt, kann zusätzlich ein Anschlussgehäusedeckel 8 vorgesehen sein, welcher einen Plattenabschnitt 80 und einen von diesem vorstehenden Pressabschnitt 81 aufweist. Der Anschlussgehäusedeckel 8 ist mit dem Plattenabschnitt 81 auf die Anschlussgehäusewandungen 71, 72, 73, 74 aufgesetzt. Wie in Fig. 5 schematisch dargestellt ist, kann der Presseabschnitt 81 mit einer Länge l81 von dem Plattenabschnitt 80 vorstehen, die im Vergleich zu einem durch die Wandungen 71, 72, 73, 74 definierten Abstand zwischen dem Plattenabschnitt 80 und dem Verbindungsleiter 6 mit einem Übermaß dimensioniert ist. Der Plattenabschnitt 81 liegt somit an den Verbindungsleitern 6 an und presst diese gegen den Mantelabschnitt 30. Der Pressabschnitt 81 kann selbst aus einem elastisch verformbaren Material, z.B. einem ElastomerKunststoff gebildet sein. Auch ist denkbar, dass die optionalen Mäntel 61 der Verbindungsleiter 6 aus einem elastischen Material gebildet sind. Der Plattenabschnitt 80 kann an den Wandungen 71, 72, 73, 74 befestigt werden, z.B. mit diesen verschraubt, wie dies in Fig. 5 symbolisch dargestellt ist.

Das Elektronikgehäuse 9 dient zur Aufnahme der Leistungselektronik 110 (in Fig. 3 nicht dargestellt) und ist an dem Mantelabschnitt 30 des Motorgehäuses 3 angeordnet. Wie in Fig. 3 reinbeispielhaft dargestellt ist, kann das Elektronikgehäuse 9 als rechteckförmige Wanne realisiert sein. Das Elektronikgehäuse 9 erstreckt sich von dem Mantelabschnitt 30 des Motorgehäuses 3 aus seitlich. Ferner kann das Elektronikgehäuse 9 benachbart zu dem optionalen Anschlussgehäuse 7 angeordnet sein, insbesondere kann das Elektronikgehäuse 9 an der sich entlang der Längsachse L3 erstreckende dritte Wandung 73 des Anschlussgehäuses 7 angeordnet sein. Wie in den Fign. 3 und 4 beispielhaft dargestellt ist, kann die erste Anschlusseinrichtung 4 an dem Elektronikgehäuse 9 angeordnet sein, insbesondere derart, dass die erste Anschlusseinrichtung 4 in der Öffnung 77 der dritten Wandung 73 des Anschlussgehäuses 7 gelegen ist.

Durch den Kühlkanal 34 werden sowohl der Elektromotor 2 als auch die Verbindungsleiter 6 gekühlt. Damit wird eine besonderes einfach aufgebaute und platzsparende Lösung zur Kühlung der stromführenden Komponenten bereitgestellt. Insbesondere wird durch die Kühlung der Verbindungsleiter 6 einer Überhitzung der Leistungselektronik 110 effizient vorgebeugt.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

## Patentansprüche

1. Elektrische Antriebseinrichtung (1) für ein Fahrzeug (100), mit:
einem Elektromotor (2), welcher dazu eingerichtet ist, ein Drehmoment an einer um eine Rotationsachse (R) drehbaren Abtriebswelle (S) bereitzustellen;
einem Motorgehäuse (3) mit einem die Rotationsachse (R) umschließenden Mantelabschnitt (30), welcher einen Kühlbereich (33) mit einem darin ausgebildeten Kühlkanal (34) zur Durchleitung eines Kühlmittels aufweist, wobei der Elektromotor (2) in dem Motorgehäuse (3) angeordnet ist;
einer ersten elektrischen Anschlusseinrichtung (4) zum Anschluss an einen Ausgang einer Leistungselektronik (110);
einer an dem Motorgehäuse (3) angeordneten zweiten elektrischen Anschlusseinrichtung (5), an welche der Elektromotor elektrisch angeschlossen ist; und
zumindest zwei Verbindungsleiter (6), welche jeweils mit der ersten Anschlusseinrichtung (4) und der zweiten Anschlusseinrichtung (5) elektrisch verbunden sind und jeweils im Kühlbereich (33) an dem Mantelabschnitt (30) des Motorgehäuses (3) anliegen, wobei der Mantelabschnitt (30) des Motorgehäuses (3) im Kühlbereich (33) an einer Außenfläche (30a) ausgebildete Vertiefungen (35) aufweist, **dadurch gekennzeichnet, dass** jeweils ein genannter Verbindungsleiter (6) in einer genannten Vertiefung (35) verläuft und dass die Vertiefungen (35) mit einer zu den Verbindungsleitern (6) korrespondierenden Querschnittsform ausgebildet sind.

2. Antriebseinrichtung (1) nach Anspruch 1, **dadurch gekennzeichnet, dass** der Mantelabschnitt (30) sich entlang der Rotationsachse (R) erstreckt und der Kühlkanal (34) sich spiralförmig um die Rotationsachse (R) erstreckt, so dass ein die Rotationsachse (R) umschließender Kühlbereich (33) ausgebildet ist.

3. Antriebseinrichtung (1) nach Anspruch 2, **dadurch gekennzeichnet, dass** die Verbindungsleiter (6) sich in dem Kühlbereich (33) entlang der Rotationsachse erstrecken.

4. Antriebseinrichtung (1) nach einem der voranstehenden Ansprüche, **dadurch gekennzeichnet, dass** ein Anschlussgehäuse (7) mit zumindest zwei von dem Mantelabschnitt (30) des Motorgehäuses (3) vorstehenden Anschlussgehäusewandungen (71, 72, 73, 74), wobei die Verbindungsleiter (6) zwischen den Anschlussgehäusewandungen (71, 72, 73, 74) angeordnet sind; und einem Anschlussgehäusedeckel (8), welcher auf die Anschlussgehäusewandungen (71, 72, 73, 74) aufgesetzt ist und einen Pressabschnitt (81) aufweist, welcher an den Verbindungsleitern (6) zur Ausübung einer Anpresskraft anliegt.

5. Antriebseinrichtung (1) nach einem der voranstehenden Ansprüche, **dadurch gekennzeichnet, dass** die erste Anschlusseinrichtung (4) im Bereich des Mantelabschnitts (30) des Motorgehäuses (3) angeordnet ist, und wobei die zweite Anschlusseinrichtung (5) an einem Stirnabschnitt (31) des Motorgehäuses (3) angeordnet ist, welcher sich quer zu der Rotationsachse (R) erstreckt und mit dem Mantelabschnitt (30) verbunden ist.

6. Antriebseinrichtung (1) nach Anspruch 5 **dadurch gekennzeichnet, dass** ein Elektronikgehäuse (9) zur Aufnahme einer Leistungselektronik (110), welches an dem Mantelabschnitt (30) des Motorgehäuses (3) angeordnet ist, wobei die erste Anschlusseinrichtung (4) an dem Elektronikgehäuse (9) angeordnet ist.

7. Antriebseinrichtung (1) nach einem der voranstehenden Ansprüche, **dadurch gekennzeichnet, dass** der Kühlkanal (34) mit einem Kühlfluid gefüllt ist, insbesondere mit einem Wasser-Glykol-Gemisch.

## Claims

1. Electric drive device (1) for a vehicle (100), comprising:
an electric motor (2) which is configured to provide a torque on an output shaft (S) which is rotatable about a rotation axis (R);
a motor housing (3) having a casing portion (30) which surrounds the rotation axis (R) and has a cooling region (33) with a cooling channel (34) formed therein for the passage of a coolant, wherein the electric motor (2) is arranged in the motor housing (3);
a first electrical connection device (4) for connection to an output of a power electronics system (110);
a second electrical connection device (5) which is arranged on the motor housing (3) and to which the electric motor is electrically connected; and
at least two connecting conductors (6) which are each electrically connected to the first connection device (4) and the second connection device (5) and each bear against the casing portion (30) of the motor housing (3) in the cooling region (33), wherein the casing portion (30) of the motor housing (3) has recesses (35) formed on an outer surface (30a) in the cooling region (33),
**characterized in that** one said connecting conductor (6) runs in one said recess (35) and **in that** the recesses (35) are formed with a cross-sectional shape corresponding to the connecting conductors (6).

2. Drive device (1) according to Claim 1, **characterized in that** the casing portion (30) extends along the rotation axis (R) and the cooling channel (34) extends helically around the rotation axis (R), so that a cooling region (33) surrounding the rotation axis (R) is formed.

3. Drive device (1) according to Claim 2, **characterized in that** the connecting conductors (6) extend in the cooling region (33) along the rotation axis.

4. Drive device (1) according to any of the preceding claims, **characterized in that** a connection housing (7) with at least two connection housing walls (71, 72, 73, 74) projecting from the casing portion (30) of the motor housing (3), wherein the connecting conductors (6) are arranged between the connection housing walls (71, 72, 73, 74); and
a connection housing cover (8) which is mounted on the connection housing walls (71, 72, 73, 74) and has a pressing portion (81) which bears against the connecting conductors (6) for exerting a contact-pressure force.

5. Drive device (1) according to any of the preceding claims, **characterized in that** the first connection device (4) is arranged in the region of the casing portion (30) of the motor housing (3), and wherein the second connection device (5) is arranged on a front portion (31) of the motor housing (3), which front portion extends transversely to the rotation axis (R) and is connected to the casing portion (30).

6. Drive device (1) according to Claim 5, **characterized in that** an electronics housing (9) for receiving a power electronics system (110), which electronics housing is arranged on the casing portion (30) of the motor housing (3), wherein the first connection device (4) is arranged on the electronics housing (9).

7. Drive device (1) according to any of the preceding claims, **characterized in that** the cooling channel (34) is filled with a cooling fluid, in particular with a water/glycol mixture.

## Revendications

1. Dispositif d'entraînement électrique (1) pour un véhicule (100), avec :
un moteur électrique (2), qui est mis au point pour fournir un couple de rotation à un arbre de sortie (S) pouvant tourner autour d'un axe de rotation (R),
un carter de moteur (3) avec une section enveloppante (30) entourant l'axe de rotation (R), laquelle section enveloppante comporte une zone de refroidissement (33) avec un canal de refroidissement (34) formé dans celle-ci pour le passage d'un réfrigérant, le moteur électrique (2) étant disposé dans le carter de moteur (3) ;
un premier dispositif de connexion électrique (4) destiné à être connecté à une sortie d'une électronique de puissance (110) ;
un deuxième dispositif de connexion électrique (5) disposé sur le carter de moteur (3), auquel le moteur électrique est connecté électriquement ; et
au moins deux conducteurs de raccordement (6), qui sont raccordés électriquement chacun au premier dispositif de connexion (4) et au deuxième dispositif de connexion (5) et reposent chacun sur la section enveloppante (30) du carter de moteur (3) dans la zone de refroidissement (33), la section enveloppante (30) du carter de moteur (3) comportant des creux (35) formés sur une surface extérieure (30a) dans la zone de refroidissement (33), **caractérisé en ce que** respectivement un conducteur de raccordement (6) s'étend dans un creux (35) et que les creux (35) sont formés avec une forme de section transversale correspondant aux conducteurs de raccordement (6).

2. Dispositif d'entraînement (1) selon la revendication 1, **caractérisé en ce que** la section enveloppante (30) s'étend le long de l'axe de rotation (R) et le canal de refroidissement (34) s'étend en spirale autour de l'axe de rotation (R), de telle sorte qu'une zone de refroidissement (33) entourant l'axe de rotation (R) est formée.

3. Dispositif d'entraînement (1) selon la revendication 2, **caractérisé en ce que** les conducteurs de raccordement (6) s'étendent le long de l'axe de rotation dans la zone de refroidissement (33).

4. Dispositif d'entraînement (1) selon l'une des revendications précédentes, **caractérisé en ce qu'**un boîtier de connexion (7) avec au moins deux parois (71, 72, 73, 74) de boîtier de connexion faisant saillie de la section enveloppante (30) du carter de moteur (3), les conducteurs de raccordement (6) étant disposés entre les parois (71, 72, 73, 74) de boîtier de connexion ; et
un couvercle (8) de boîtier de connexion, qui est placé sur les parois (71, 72, 73, 74) du boîtier de connexion, et une section de pression (81), qui repose sur les conducteurs de raccordement (6) pour exercer une force de pression.

5. Dispositif d'entraînement (1) selon l'une des revendications précédentes, **caractérisé en ce que** le premier dispositif de connexion (4) est disposé dans la zone de la section enveloppante (30) du carter de moteur (3), et le deuxième dispositif de connexion (5) étant disposé sur une section frontale (31) du carter de moteur (3), laquelle s'étend transversalement à l'axe de rotation (R) et est raccordée à la section enveloppante (30).

6. Dispositif d'entraînement (1) selon la revendication 5, **caractérisé en ce qu'**un boîtier électronique (9) destiné à recevoir une électronique de puissance (110) qui est disposé sur la section enveloppante (30) du boîtier de moteur (3), le premier dispositif de connexion (4) étant disposé sur le boîtier électronique (9).

7. Dispositif d'entraînement (1) selon l'une des revendications précédentes, **caractérisé en ce que** le canal de refroidissement (34) est rempli d'un fluide de refroidissement, en particulier d'un mélange eau-glycol.
